# FASCICULE DE BREVET EUROPEEN

(11) **EP 1 680 605 B1**
(45) Date de publication et mention de la délivrance du brevet: **12.03.2008**
(21) Numéro de dépôt: 04818438.6
(22) Date de dépôt: 08.10.2004
(51) Int. Cl.: F15B 21/04, F16K 21/02

(54) **DISTRIBUTEUR HYDRAULIQUE COMPRENANT UN ELEMENT D'ENTREE AVEC VALVE DE BALAYAGE**
HYDRAULISCHER VERTEILER MIT EINEM EINGANG MIT EINEM ABTASTVENTIL
HYDRAULIC DISTRIBUTOR COMPRISING AN INPUT WITH A SCANNING VALVE

(30) Priorité: 04.11.2003 FR 0312920
(43) Date de publication de la demande: 19.07.2006
(73) Titulaire: Bosch Rexroth D.S.I., 69200 Venissieux (FR)
(72) Inventeur: STEINHILBER, Armin, F-69970 Chaponnay (FR)
(74) Mandataire: Maureau, Philippe
(86) Numéro de dépôt international: PCT/FR2004/002550
(87) Numéro de publication internationale: WO 2005/047710

(56) Documents cités:
- EP-A- 0 056 230
- DE-A- 3 205 411
- FR-A- 1 562 715

## Description

La présente invention a pour objet un ensemble comportant une pompe et un distributeur hydraulique comprenant un élément d'entrée avec valve de balayage.

Cet élément d'entrée présente un corps muni d'orifices de raccordement respectivement P à la pompe, T au réservoir et LS pour un retour d'information à la pompe, le corps comportant un alésage pouvant mettre en communication les orifices P et T reliés respectivement à la pompe et au réservoir, à l'intérieur duquel est monté un piston susceptible d'établir ou non cette communication, dont une extrémité est soumise à la pression de la pompe et dont l'autre extrémité est soumise à la pression LS pour le retour d'information et à la pression d'un ressort. Sur la ligne LS de retour d'information à la pompe sont disposés un limiteur de pression et un régulateur de débit. Le limiteur de pression vise à protéger le bloc et la pompe. Le régulateur de débit vise à décomprimer la ligne LS pour que la pompe puisse retrouver sa position de repos. Ce régulateur évacue de l'huile en fonction du calibrage.

La valve de balayage est destinée à faire circuler de l'huile de la pompe vers le réservoir lorsque le distributeur est en position de repos. L'effort exercé par le ressort est sensiblement supérieur à la valeur de régulation de la pompe. Si la valeur de régulation de pression de la pompe est de l'ordre de 15 bars, la pression exercée par le ressort sur le piston est de l'ordre de 25 bars.

Il en résulte des à-coups, lors du début d'un mouvement hydraulique, puisque c'est la pression de 25 bars qui est prise en compte, au lieu de la pression théorique de 15 bars.

Le document DE 32 05 411 décrit un ensemble selon le préambule de la revendication 1.

Le but de l'invention est de permettre un fonctionnement de la valve de balayage avec un effort inférieur du ressort permettant d'éviter les à-coups lors de la commande d'un mouvement hydraulique.

A cet effet, selon l'invention, la pression exercée par le ressort est sensiblement égale à la pression de refoulement de la pompe, et le piston et/ou le corps comportent des orifices de mise en communication des chambres situées côté pompe P et côté réservoir T, lorsque le distributeur est en position neutre.

Grâce aux orifices, la valve de balayage laisse circuler une partie d'huile de refoulement de la pompe lorsque le bloc de distribution n'est pas sollicité.

Grâce aux orifices, la valve de balayage laisse circuler une partie d'huile de refoulement de la pompe lorsque le bloc de distribution n'est pas sollicité.

Avantageusement, la section des orifices permet le passage d'un débit compris entre 10 et 15% du débit maximal installé, sous une pression de l'ordre de 15 bars.

Cet agencement permet d'une part d'assurer un débit minimum en position neutre du distributeur, sous la pression de refoulement de la pompe, et de maintenir un débit minimal dans la ligne d'échappement pour assurer une fonction de réalimentation optimale.

Cette circulation permet également de maintenir un débit de fluide pour assurer le refroidissement du fluide.

Cet agencement permet de vérifier, de contrôler et d'ajuster la valeur de la pression de refoulement de la pompe en position neutre du distributeur.

Comme indiqué précédemment, le comportement dynamique de la machine est amélioré grâce à une progressivité de commande, car la section d'ouverture des tiroirs n'est pas soumise à d'importantes variations de pression.

La fonction de surpression est toujours réalisée lors des arrêts brutaux, et une fermeture progressive de la valve est réalisée dès que la pression de fonctionnement devient inférieure à la pression nominale.

Suivant une première forme d'exécution, les orifices de mise en communication des chambres situées côté pompe P et côté réservoir T sont constitués par des évidements ou fentes débouchant dans la surface extérieure du piston ou dans la surface du corps délimitant l'alésage pour le piston.

Suivant une autre forme d'exécution, les orifices de mise en communication des chambres situées côté pompe P et côté réservoir T sont constitués par au moins un canal ménagé dans le piston ou dans le corps.

Avantageusement, la section des orifices de mise en communication des chambres situées côté pompe P et côté réservoir T varie en fonction des caractéristiques du tiroir de distribution.

De toute façon, l'invention sera bien comprise à l'aide de la description qui suit, en référence au dessin schématique annexé représentant à titre d'exemple non limitatif, une forme d'exécution de cet élément d'entrée avec valve de balayage.
Figure 1 en est une vue en coupe longitudinale.
Figure 2 est une vue d'une courbe illustrant la variation de la section d'ouverture du doseur d'alimentation du distributeur, en fonction de la pression fournie par la pompe.
Figure 3 est une vue d'une courbe illustrant la variation de débit de fluide dans la valve de balayage en fonction de la pression fournie par la pompe.

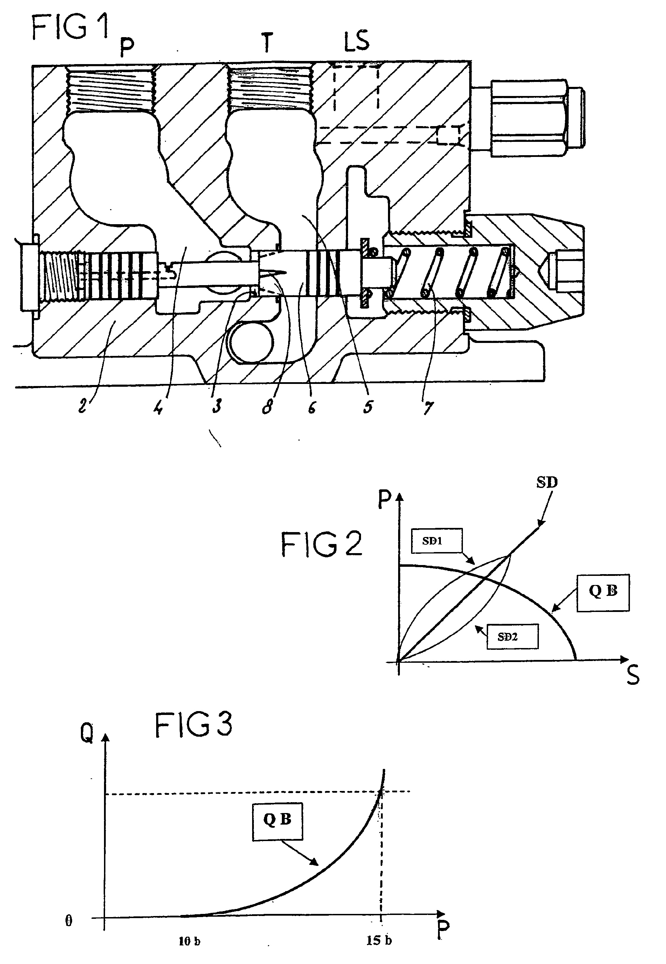

La figure 1 représente l'élément d'entrée dont le corps est désigné par la référence 2. Ce corps est muni d'orifices de raccordement respectivement P à la pompe, T au réservoir et LS pour un retour d'information à la pompe. Le corps comprend un alésage 3 pouvant mettre en communication les chambres 4 et 5 reliées respectivement aux orifices P et T, reliés à la pompe et au réservoir. Dans cet alésage 3 est monté coulissant un piston 6 dont une extrémité est soumise à la pression P de la pompe et dont l'autre extrémité est soumise à la pression LS pour le retour d'information et à la pression d'un ressort 7.

Suivant la caractéristique essentielle de l'invention, des orifices 8 sont ménagés dans le piston 6, pour permettre, lorsque le piston est en position de fermeture entre les chambres 4 et 5, le passage d'un débit de fuite. Dans la forme d'exécution représentée au dessin, les orifices 8 sont constitués par des évidements ménagés dans le corps du piston et débouchant dans la face externe de celui-ci.

Le ressort 7 est dimensionné pour exercer une pression sensiblement égale à la pression de refoulement de la pompe.

La figure 2 représente un graphique dans lequel l'axe des abscisses illustre la section d'ouverture du doseur d'alimentation en fluide d'un utilisateur par le distributeur, et l'axe des ordonnées illustre la pression de fluide fournie par la pompe. La courbe SD montre une évolution linéaire de la section d'ouverture du doseur d'alimentation en fonction de la pression, tandis que les courbes SD1 et SD2 sont des courbes-enveloppes de l'évolution de section en fonction de la forme des ouvertures ou évidements délimitant le passage de fluide au niveau du doseur. Sur ce graphique est représentée également une courbe QB d'évolution du débit consommé par la valve de balayage en fonction de la pression de fluide fournie par la pompe. Cette courbe montre que le débit QB consommé par la valve de balayage diminue lorsque la section d'ouverture du doseur augmente. Le débit QB consommé diminue en même temps que la pression fournie par la pompe. Cette baisse de pression étant due aux pertes dans le circuit pompe-distributeur, lors de l'ouverture du distributeur.

La figure 3 complète la figure 2 en illustrant la variation du débit QB consommé dans la valve de balayage en fonction de la pression de la pompe. Il est possible de faire varier le débit consommé par la valve de balayage en adaptant la section des orifices de fuite ménagés entre la chambre 4 soumise à la pression hydraulique et la chambre 5 reliée au réservoir.

Comme il va de soi, l'invention ne se limite pas à la seule forme d'exécution de cet élément d'entrée avec valve de balayage, décrit ci-dessus à titre d'exemple, elle en embrasse au contraire toutes les variantes. C'est ainsi notamment que les orifices 8, ménagés dans le piston, pourraient être remplacés par des orifices ménagés dans la paroi de l'alésage servant au déplacement du piston, ou encore par des canaux ménagés dans le piston et/ou des canaux ménagés dans le corps de l'élément, sans que l'on sorte pour autant du cadre de l'invention.

## Revendications

1. Ensemble comportant une pompe et un distributeur hydraulique, le distributeur hydraulique comprenant un élément d'entrée avec valve de balayage, présentant un corps (2) muni d'orifices de raccordement respectivement (P) à la pompe, (T) au réservoir et (LS) pour un retour d'information à la pompe, le corps comportant un alésage (3) pouvant mettre en communication les orifices (P) et (T) reliés respectivement à la pompe et au réservoir, à l'intérieur duquel est monté un piston (6) susceptible d'établir ou non cette communication, dont une extrémité est soumise à la pression de la pompe et dont l'autre extrémité est soumise à la pression (LS) pour le retour d'information et à la pression d'un ressort (7),
**caractérisé en ce que** la pression exercée par le ressort (7) est sensiblement égale à la pression de refoulement de la pompe, et le piston (6) et/ou le corps (2) comportent des orifices (8) de mise en communication des chambres (4, 5) situées côté pompe (P) et côté réservoir (T), lorsque le distributeur est en position de repos.

2. Ensemble selon la revendication 1, **caractérisé en ce que** la section des orifices (8) permet le passage d'un débit compris entre 10 et 15% du débit maximal installé, sous une pression de l'ordre de 15 bars.

3. Ensemble selon l'une des revendications 1 et 2, **caractérisé en ce que** les orifices (8) de mise en communication des chambres situées côté pompe (P) et côté réservoir (T) sont constitués par des évidements ou fentes débouchant dans la surface extérieure du piston ou dans la surface des corps délimitant l'alésage pour le piston.

4. Ensemble selon l'une des revendications 1 et 2, **caractérisé en ce que** les orifices de mise en communication des chambres situées côté pompe (P) et côté réservoir (T) sont constitués par au moins un canal ménagé dans le piston ou dans le corps.

5. Ensemble selon l'une des revendications 1 à 4, **caractérisé en ce que** la section des orifices (8) de mise en communication des chambres situées côté pompe (P) et côté réservoir (T) varie en fonction des caractéristiques du tiroir de distribution.

## Claims

1. Unit comprising a pump and a hydraulic distributor, the hydraulic distributor including an input element with a scavenging valve, that has a body (2) provided with openings connecting respectively (P) to the pump, (T) to the reservoir and (LS) enabling information return to the pump, the body comprising a bore (3) able to bring the openings (P) and (T) connected respectively to the pump and to the reservoir into communication, inside which is mounted a piston (6) capable of establishing or not establishing said communication, one end of which is subjected to the pressure of the pump and the other end of which is subjected to the pressure (LS) for information return and to the pressure of a spring (7), **characterised in that** the pressure exerted by the spring (7) is substantially equal to the discharge pressure of the pump, and the piston (6) and/or the body (2) comprise openings (8) for bringing the chambers (4, 5) located on the pump side (P) and on the reservoir side (T) into communication, when the distributor is in the rest position.

2. Unit according to claim 1, **characterised in that** the cross-section of the openings (8) is such as to enable a flow rate of between 10 and 15% of the maximum installed rate to pass through, at a pressure of about 15 bars.

3. Unit according to claim 1, **characterised in that** the cross-section of the openings (8) for bringing the chambers located on the pump side (P) and on the reservoir side (T) into communication are constituted by wells or slits that lead into the outer surface of the piston or into the surface of the bodies defining the bore for the piston.

4. Unit according to one of the claims 1 and 2, **characterised in that** the openings for bringing the chambers located on the pump side (P) and on the reservoir side (T) into communication are constituted by at least one channel provided in the piston or in the body.

5. Unit according to one of claims 1 to 4, **characterised in that** the cross-section of the openings (8) for bringing the chambers located on the pump side (P) and on the reservoir side (T) into communication varies as a function of the characteristics of the slide valve.

## Patentansprüche

1. Ensemble umfassend eine Pumpe und einen hydraulischen Verteiler, wobei der hydraulische Verteiler ein Eingangselement mit Wegeventil umfasst, und der einen Körper (2) hat, der mit Öffnungen versehen ist, die jeweils (P) mit der Pumpe, (T) mit dem Tank und (LS) für den Außenrücklauf zur Pumpe verbunden sind, wobei der Körper eine Bohrung (3) umfasst, die die Öffnungen (P) und (T), die mit der Pumpe beziehungsweise dem Tank verbunden sind, miteinander in Verbindung bringen kann, und in deren Innern ein Kolben (6) montiert ist, der diese Verbindung herstellen oder unterbinden kann und dessen eines Ende dem Druck der Pumpe ausgesetzt ist und dessen anderes Ende dem Druck (LS) für den Außenrücklauf und dem Druck einer Feder (7) ausgesetzt ist, **dadurch gekennzeichnet, dass** der von der Feder (7) ausgeübte Druck im wesentlichen dem Förderdruck der Pumpe entspricht, und dass der Kolben (6) und/oder der Körper (2) Öffnungen (8) aufweisen, um die Kammern (4, 5), die auf der Seite der Pumpe (P) beziehungsweise auf der Seite des Tanks (T) liegen, in Verbindung zu setzen, wenn der Verteiler in Ruhestellung ist.

2. Ensemble nach Anspruch 1, **dadurch gekennzeichnet, dass** der Querschnitt der Öffnungen (8) den Durchgang einer Durchsatzmenge erlaubt, die zwischen 10 und 15 % des installierten Maximaldurchsatzes, bei einem Druck in der Größenordnung von 15 bar, liegt.

3. Ensemble nach einem der Ansprüche 1 und 2, **dadurch gekennzeichnet, dass** die Öffnungen (8), die die Kammern, die auf der Seite der Pumpe (P) beziehungsweise der Seite des Tanks (T) liegen, in Verbindung bringen, gebildet sind durch Aussparungen oder Schlitze, die auf der Außenfläche des Kolbens oder auf den Körperflächen münden, die die Bohrung für den Kolben begrenzen.

4. Ensemble nach einem der Ansprüche 1 und 2, **dadurch gekennzeichnet, dass** die Öffnungen, die die Kammern, die auf der Seite der Pumpe (P) beziehungsweise der Seite des Tanks (T) liegen, in Verbindung bringen, durch mindestens einen Kanal gebildet sind, der im Kolben oder im Körper ausgeführt ist.

5. Ensemble nach einem der Ansprüche 1 bis 4, **dadurch gekennzeichnet, dass** der Querschnitt der Öffnungen (8), die die Kammern, die auf der Seite der Pumpe (P) beziehungsweise auf der Seite des Tanks (T) liegen, in Verbindung bringen, variiert in Abhängigkeit von den Charakteristiken des Steuerschiebers.
